# EUROPEAN PATENT SPECIFICATION

(11) **EP 3 726 999 B1**
(45) Date of publication and mention of the grant of the patent: **26.02.2025**
(21) Application number: 18891747.0
(22) Date of filing: 17.12.2018
(51) Int. Cl.: A23B 7/01, A23B 7/00, A23B 7/005, A23B 7/015, A23G 3/34, A23G 3/36, A23G 3/38, A23G 3/48, A23G 4/06

(54) **A METHOD OF PREPARING A CHEWING GUM OR CONFECTIONERY PRODUCT**
VERFAHREN ZUR HERSTELLUNG EINES KAUGUMMI ODER SÜSSWARENPRODUKTS
PROCÉDÉ DE PRÉPARATION D'UN CHEWING-GUM OU D'UN PRODUIT DE CONFISERIE

(30) Priority: 18.12.2017 US 201762607008 P
(43) Date of publication of application: 28.10.2020
(73) Proprietor: Wm. Wrigley Jr. Company, Chicago, IL 60642 (US)
(72) Inventor: UNLU, Emine, Chicago, IL 60642 (US); VISWANATHAN, Thiruvenkadam, Chicago, IL 60642 (US)
(74) Representative: Greaves Brewster LLP
(86) International application number: PCT/US2018/065953
(87) International publication number: WO 2019/126011

(56) References cited:
- WO-A1-2017/095774
- WO-A2-2013/074762
- US-A1- 2002 192 340
- BRANKA KATUSIN-RAZEM ET AL: "Radiation Decontamination of Tea Herbs", JOURNAL OF FOOD SCIENCE,, vol. 53, no. 4, 1 July 1988 (1988-07-01), pages 1120 - 1126, XP001333126

## Description

### BACKGROUND OF THE INVENTION

The present invention relates to a method of preparing a chewing gum or confectionery product, the chewing gum or confectionery product having inclusions of pieces of plant material such as pieces of mint leaves or dried fruit, wherein the plant material is stabilized against microbial grown by treatment with gamma radiation.

WO 2017/095774 A1 discloses a method of preparing a chewing gum or confectionery product (pressed mints) comprising pieces of plant material, such as mint or fruit comprising the step of preparing plant material pieces of a desired size, irradiating the fresh plant pieces, for microbial safety and shelf life, preparing a chewing gum or confectionery product and incorporating the irradiated plant material onto the surface of the chewing gum or confectionery product. Chewing gums and confections are enjoyed by millions of consumers for their flavor and breath-freshening properties, among other benefits. Many chewing gum consumers seek products that provide a novel appearance or sensory experience. Examples of products designed to appeal to these consumers include those with edible ink printing, those containing colored particles which may or may not provide flavor and/or textural sensations and those having a second chewing gum of a contrasting color coextruded with a surface applied to a first chewing gum composition. Many confectionery products may be treated similarly.

Many consumers are also seeking food products of all sorts which contain more natural ingredients and/or provide a more sophisticated or "gourmet" perception. In an effort to provide more natural and more sophisticated products, confectioners and gum makers may add pieces of plant material such as leaves and fruit pieces to the product. In order to preserve the appearance, flavor and safety of the product, it is necessary to treat these plant materials to make them microbiologically stable.

Past efforts at producing microbiologically stable plant materials such as herbs and tea leaves have relied on freeze drying. While freeze dried plant materials are microbiologically stable on the shelf, they may not be so when incorporated into a confectionery product or chewing gum which contains a small amount of water. Furthermore, the dried plant material is typically brittle and easily broken up when subjected to processing such as mixing and rolling. This results in the plant material being reduced to a powder rather than the small pieces which are preferred.

Gamma irradiation is a standard FDA approved process for disinfection of spices and herbs. Radiation for the treatment of food is achieved through the application of gamma rays (with Cobalt-60 or Cesium-137 radioisotopes). Radiation principles explain how the gamma rays, e-beams and X-rays interact with matter. These interactions result in the random formation of energetic electrons throughout the matter, which causes the formation of energetic molecular ions. These ions may be subject to electron capture and dissociation, as well as rapid rearrangement through ion-molecule reactions, or they may dissociate with time depending on the complexity of the molecular ion. Effects of radiation on matter depend on the type of the radiation and its energy level, as well as the composition, physical state, temperature and the atmospheric environment of the absorbing material. The chemical changes in matter can occur via primary radiolysis effects, which occur as a result of the adsorption of the energy by the absorbing matter, or via secondary effects, which occur as a result of the high reactivity of the free radicals and excited ions produced as a result of the primary effects. These highly reactive intermediates can undergo a variety of reactions leading to stable chemical products. For living things, these chemical changes can ultimately have biological consequences such as irreversible single stranded and double stranded damage to DNA of the microbes thus deactivating or killing them.

Several reports in literature suggest microbial reduction is possible without adversely affecting the oil content. In one study, Pereira et al (2015) concluded irradiation up to 10 kGy (kilaGrays: 1 Gy = 1 Joule of absorbed energy per kilogram of material) can effectively disinfect Mentha piperita without affecting the phenolic content of extracts. No substantial changes were found in volatile oil content at doses up to 10-15 kGy (Farkas 2001). Several irradiation service providers have developed irradiation dose requirement for 5-log reduction of human pathogens of interest. While sterile spices and herbs can be achieved at high irradiation dose, like 15-20 kGy, production of undesirable off-flavors flavors limits application to lower irradiation doses. For most herbs and spices application, irradiation dose in 4-10 kGy range produces a "pasteurized" product with no noticeable change to flavor.

The present invention provides chewing gum and confections such as pressed mint products having a distinctive, attractive appearance as well as unique flavor and texture features provided by pieces of plant material included on or in the product. The present invention further provides means for microbiologically stabilizing the plant material.

### SUMMARY OF THE INVENTION

The present invention is directed to a method of preparing chewing gums and confectionery products which include plant materials such as pieces of leaves and fruit. The chewing gum or confectionery piece will have the plant material inclusions distributed on at least one side surface of which a major portion of the area is partially or substantially covered one or more pieces of plant material. The plant material inclusions are mixed onto the body of the product and thereby distributed throughout the mass and typically visible on any exposed surfaces.

In the present invention, the plant material is treated with gamma radiation prior to incorporation into the confectionery or chewing gum product to render it microbiologically stable.

In treating the plant material, it is important that the treatment not be excessive or insufficient. The anti-microbial treatment is excessive if the flavor or appearance of the plant material is adversely affected or affected more than is necessary to make the material microbiologically stable. The anti-microbial treatment is insufficient if unacceptable microbial growth occurs on the plant material or in the finished product. In methods of the present invention, the pieces of plant material are subjected to IR radiation for a time and at an intensity sufficient to render mold, fungus and bacteria incapable of growth while not significantly impacting the sensory benefits conveyed by the plant material. After treatment, the plant material is suitable for incorporation into the confectionery mass or attachment to the surface of the product.

### DESCRIPTION OF THE INVENTION

The present invention is defined in the appended claims. The present invention defines a method of preparing a chewing gum or confectionery product comprising pieces of plant material comprising the steps of:
preparing plant material pieces of a desired size, wherein the plant material is a leaf,
irradiating the plant pieces with gamma radiation for a time and intensity sufficient to render it microbiologically stable while substantially preserving the color and flavor of the plant material, wherein the plant material is dried prior to irradiation, wherein the energy absorbed by the dried plant material is at least 10 kGy, and wherein the time of irradiation is at least 40 minutes, preparing a chewing gum or confectionery product,
incorporating the irradiated plant material into the mass, or onto the surface, of the chewing gum or confectionery product.

The method of the present invention provides a chewing gum or confection which comprises small pieces of plant material which have been treated with gamma radiation to produce a natural, microbiologically stable ingredient.

By microbiologically stable, it is meant that any bacteria, yeast or mold on the material is killed or weakened or reduced in number to the extent that growth is prevented (at least to an acceptable degree) after the material is incorporated into the finished product.

By small pieces of plant material, it is meant leaves, fruit or other edible portions of edible plants which have a size suitable for inclusion in candies and chewing gum. In most cases, this will be pieces that have been comminuted to have dimensions on the order of less than 1 mm or less than 2 mm or less than 3mm or less than 5 mm. In some cases, the pieces may have up to two larger dimensions as long as the third dimension is sufficiently small, such as an intact mint leaf.

Gamma radiation (also called gamma rays) refers to penetrating electromagnetic radiation of a kind arising from the radioactive decay of atomic nuclei. It consists of photons in the highest observed range of photon energy. Unlike infrared, radio frequency and microwave radiation, gamma radiation kills and inactivates microbial contaminants directly rather than through heating the material. For this reason, it is less likely to cause undesirable changes in color and flavor.

Because the gamma irradiation process does not generate significant amounts of heat, the plant material must be dried by other means if it is to be incorporated into the chewing gum or confectionery composition in dried form, which is normally the case. Drying may be accomplished by air drying, infrared drying, microwave or radio frequency drying, freeze drying or any other means known in the art. The plant material is dried prior to gamma irradiation.

The dried plant material is exposed to at least 10 kGy of gamma radiation.

In some embodiments, the dried plant material is exposed to at least 12 kGy of gamma radiation.

In some embodiments, the dried plant material is exposed to at least 15 kGy of gamma radiation.

In some embodiments, the dried plant material is exposed to at least 10 kGy, but less than 20 kGy of gamma radiation.

In some embodiments, the dried plant material is exposed to at least 10 kGy, but less than 30 kGy of gamma radiation.

In some embodiments, the dried plant material is exposed to at least 10 kGy, but less than 50 kGy of gamma radiation.

The dried plant material is irradiated for at least 40 minutes.

In some embodiments, the dried plant material is irradiated for at least 50 minutes.

In some embodiments, the dried plant material is irradiated for at least 60 minutes.

In some embodiments, the dried plant material is irradiated for at least 100 minutes.

In some embodiments, the dried plant material is irradiated for at least 200 minutes.

The plant material will be a leaf such as a mint leaf such as peppermint, spearmint or other edible members of the Labiatae (mint) family such as basil, rosemary, sage or oregano as well as non-mint herbs.

It is necessary to microbiologically stabilize the plant material to ensure food safety and shelf life. In the present invention, this is accomplished by exposing the plant material to gamma radiation. In order to preserve the color and other sensory properties of the product, it is important that the plant material be irradiated for the minimum amount of time and gamma intensity necessary to assure microbial stability.

Different types of gamma emission apparatus will have different control systems making it difficult to specify settings which would apply to all such systems. Therefore it is most appropriate to express the exposure in terms of time and total gamma radiation absorbed per unit mass of plant materials noted above.

In some embodiments, the plant material may be dried by other means such as air drying or freeze drying prior to gamma irradiation.

The fundamental components of a chewing gum typically are a water-insoluble gum base portion and a water-soluble bulking agent portion. The primary component of the gum base is an elastomeric polymer which provides the characteristic chewy texture of the product. The gum base will typically include other ingredients which modify the chewing properties or aid in processing the product. These include plasticizers, softeners, fillers, emulsifiers, plastic resins, as well as colorants and antioxidants. The water soluble portion of the chewing gum typically includes a bulking agent together with minor amounts of secondary components such as flavors, high-intensity sweeteners, colorants, water-soluble softeners, gum emulsifiers, acidulants and sensates. Typically, the water-soluble portion, sensates, and flavors dissipate during chewing and the gum base is retained in the mouth throughout the chew.

Any suitable chewing gum base and chewing gum formula may be used to produce a shell for center-filled chewing gums of the present invention. By suitable it is meant that the formula is capable of being processed through the selected equipment.

The insoluble gum base typically may contain any combination of elastomers, vinyl polymers, elastomer plasticizers, fillers, softeners, waxes and other optional ingredients such as colorants and antioxidants. The variety of gum base ingredients typically used provide the ability to modify the chewing characteristics of gums made from the gum base.

Elastomers provide the rubbery, cohesive nature to the gum which varies depending on this ingredient's chemical structure and how it may be compounded with other ingredients. Natural elastomers may include natural rubber such as smoked or liquid latex and guayule, natural gums such as jelutong, lechi caspi perillo, massaranduba balata, massaranduba chocolate, nispero, rosidinha, chicle, gutta percha, gutta kataiu, niger gutta, tenu, chilte, chiquibul, gutta hang kang. Synthetic elastomers may include high molecular weight elastomers such as butadiene-styrene copolymers and isobutylene-isoprene copolymers. Other polymers which sometimes serve as elastomers include polybutadiene and polyisobutylene, vinyl polymers such as polyvinyl acetate, polyethylene, vinyl copolymeric elastomers such as vinyl acetate/vinyl laurate, vinyl acetate/vinyl stearate, ethylene/vinyl acetate, polyvinyl alcohol or mixtures thereof. These polymers perform best when used in combination with butadiene-styrene copolymers and isobutylene-isoprene copolymers.

Vinyl polymeric and copolymeric type elastomers provide tack resistance, vary the chew characteristics of gums made from these bases and offer hydrophilic properties beneficial to sensory perception of the final gums. For copolymeric types, the amount of vinyl laurate, vinyl stearate, or ethylene present in the vinyl laurate/vinyl acetate (VLNA), vinyl stearate/vinyl acetate (VSNA), or ethylene/vinyl acetate (EVA) copolymers respectively typically ranges from about 10 to about 60 percent by weight of the copolymer. Average molecular weights of these polymers may range from about 2,000 to about 80,000. Ball and ring softening points of these polymers may range from about to 50 to 120°C. Polyvinyl acetate having an average molecular weight from about 8,000 to about 52,000 are preferred for use in the gum base and gum of the present invention. More preferred for chewing gum bases are those of from about 10,000 to about 35,000 molecular weight, and for bubble gum bases, those having from about 30,000 to about 60,000 molecular weight. Vinyl polymers typically release flavor quickly, and using iso-alkanic waxes exhibiting small crystalline structure with these vinyl polymers extends flavor release.

Petroleum waxes aid in the curing of the finished gum made from the gum base as well as improve shelf-life and texture. Wax crystal size when hard also improves the release of flavor. Those waxes high in iso-alkanes have a smaller crystal size than those waxes high in normal-alkanes, especially those with normal-alkanes of carbon numbers less than 30. The smaller crystal size allows slower release of flavor since there is more hindrance of the flavor's escape from this wax versus a wax having larger crystal sizes.

Synthetic waxes are produced by means atypical of petroleum wax production. The synthetic waxes may include waxes containing branched alkanes and copolymerized with monomers such as, but not limited to, propylene and polyethylene and Fischer-Tropsch type waxes. Polyethylene wax is not in the same category as polyethylene, a polymer of ethylene monomers.

Elastomer solvents (sometimes called elastomer plasticizers) vary the firmness of the gum base. Their specificity on elastomer inter-molecular chain breaking (plasticizing) along with their varying softening points cause varying degrees of finished gum firmness when used in base. This is also important when one wishes to provide more elastomeric chain exposure to the alkanic chains of the waxes. Elastomer solvents include natural rosin esters such as glycerol ester of partially hydrogenated rosin, glycerol ester of polymerized rosin, glycerol ester of partially dimerized rosin, glycerol ester of rosin, glycerol ester of tall oil rosin, pentaerythritol esters of partially hydrogenated rosin, partially hydrogenated methyl esters of rosin, pentaerythritol ester of rosin, synthetic elastomer plasticizers such as terpene resins derived from alpha-pinene, beta-pinene and/or d-limonene, and mixtures thereof. The elastomer solvents used may be of one type or of combinations of more than one. Typically, the ratios of one to the other are dependent on each respective softening point, on each effect on flavor release, and on each respective degree of tack they cause to the gum. Ball and ring softening points of the rosin ester types described above may range from about 60 to about 120°C. Softening points of the terpene resins may range from about 60 to about 130°C and an average molecular weight of from about 500 to 2,000. Occasionally, both terpene and rosin ester resins may be used together.

Softeners modify the texture, cause the hydrophobic and hydrophilic components of the base to be miscible, and may further plasticize the synthetic elastomers of the gum base. Softeners include fully hydrogenated oils of cottonseed, soybean, palm, palm kernel, coconut, safflower and the like, as well as monoglycerides, diglycerides, acetylated monoglycerides, distilled mono- and diglycerides and de-oiled or "powdered" lecithin. The glycerides and lecithin are sometimes referred to as emulsifiers.

Fillers used in gum base modify the texture of the gum base and aid in processing. Fillers include carbonate or precipitated carbonated types such as magnesium and calcium carbonate, ground limestone and silicate types such as magnesium and aluminum silicate, clay, alumina, talc, as well as titanium oxide, mono- di- and tri-calcium phosphate, cellulose polymers such as ethyl, methyl and wood or mixtures thereof.

Other optional ingredients such as antioxidants and colorants may also be used in the gum base. Antioxidants prolong shelf-life and storage of gum base, finished gum or their respective components including fats and flavor oils. Antioxidants suitable for use in gum base or gum prepared by the method of the present invention include butyiated hydroxyanisole (BHA), butylated hydroxytoluene (BHT), beta-carotenes, tocopherols, acidulants such as Vitamin C, propyl gallate, other synthetic and natural types or mixtures thereof in free-flowing ground or pulverized form.

The soluble portion of chewing gums is composed of flavoring agents (including sensates such as physiological cooling agents, warming agents and tingling agents), bulking agents (also called bulk sweeteners), high intensity sweeteners, colors, acidulants, fillers, emulsifiers, water soluble softening agents and binders.

Bulk sweeteners include both sugars and sugar alcohols. Bulk sweeteners typically constitute about 5% to about 95% by weight of the chewing gum, more typically, about 20% to about 80% by weight, and more commonly, about 30% to about 60% by weight of the gum. Sugar sweeteners generally include saccharide-containing components commonly known in the chewing gum art, including but not limited to, sucrose, dextrose, maltose, dextrin, dried invert sugar, fructose, galactose, corn syrup solids, and the like, alone or in combination. Sugarless sweeteners include, but are not limited to, sugar alcohols such as sorbitol, mannitol, xylitol, hydrogenated starch hydrolysates, maltitol, erythritol, isomalt and the like, alone or in combination.

High-intensity artificial sweeteners can also be used, alone or in combination, with the above. Preferred sweeteners include, but are not limited to, sucralose, aspartame, N-substituted APM derivatives such as neotame, salts of acesulfame, alitame, saccharin and its salts, cyclamic acid and its salts, glycyrrhizin, dihydrochalcones, thaumatin, monellin, stevia and the like, alone or in combination. In order to provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and fiber extrusion may be used to achieve the desired release characteristics.

Softeners are added to the chewing gum in order to optimize the chewability and mouth feel of the gum. The softeners, which are also known as plasticizers and plasticizing agents, generally constitute between approximately 0.5% to about 15% by weight of the chewing gum. The softeners may include glycerin, lecithin, and combinations thereof. Aqueous sweetener solutions such as those containing sorbitol, hydrogenated starch hydrolysates, corn syrup and combinations thereof, may also be used as softeners and binding agents in chewing gum.

Combinations of sugar and/or sugarless sweeteners may be used in chewing gum. Additionally, the softener may also provide additional sweetness such as with aqueous sugar or alditol solutions.

If a low calorie gum is desired, a low calorie bulking agent can be used. Examples of low calorie bulking agents include: polydextrose; oligofructose (Raftilose); inulin (Raftilin); fructooligosaccharides (NutraFlora); palatinose oligosaccharide; guar gum hydrolysate (BeneFiber); or indigestible dextrin (Fibersol). However, other low calorie bulking agents can be used.

A variety of flavoring agents can also be used, if desired. The flavor can be used in amounts of about 0.1 to about 15 weight percent of the gum, and preferably, about 0.2% to about 5% by weight. Flavoring agents may include essential oils, synthetic flavors or mixtures thereof including, but not limited to, oils derived from plants and fruits such as citrus oils, fruit essences, peppermint oil, spearmint oil, other mint oils, clove oil, oil of wintergreen, anise and the like. Artificial flavoring agents and components may also be used. Natural and artificial flavoring agents may be combined in any sensorially acceptable fashion. Included in the general category of flavors are sensates, chemicals which impart physiological sensations in the mouth such as cooling agents, warming agents and tingling agents. Examples of cooling agents include menthol, WS-23, WS-3, WS-5, isopulegol, esters of menthol such as menthyl succinate, menthyl lactate and menthyl glutarate, among others. Warming and tingling agents include capsaicin, piperine, jambu and spilanthol.

In general, chewing gum is manufactured by sequentially adding the various chewing gum ingredients to a commercially available mixer known in the art. After the ingredients have been thoroughly mixed, the gum mass is discharged from the mixer. In a variation, a mixing extruder may be used to mix the ingredients and discharge the mixed gum in a continuous process. The mass is then typically passed through an extruder and a series of sizing and scoring rollers to produce sheets of chewing gum at the desired thickness and scored to define the finished piece size. In the present invention, the plant material may be added to the mixing apparatus - preferably late in the mixing process to preserve the structure of the plant material. Alternatively, the plant material may be distributed across the sheet prior to introduction to a sizing roller. In surface applied embodiments, it may be necessary to spray the sheet with an edible adhesive such as a sugar, sugar alcohol or syrup solution prior to distributing the plant material on the surface. This improves adherence of the plant material to the gum sheet.

In the case of confections, these are typically composed primarily of a compressible sugar or sugar alcohol composition which can be purchased from sugar and polyol manufacturers. The compressible powder is typically blended with liquid or dried flavoring agents, as well as colors, and other optional ingredients. The blended composition is typically introduced into a tablet press, such as a rotary tablet press and compressed with die forms to produce a hard tablet having a shape determined by the die. In the present invention, the plant material pieces may be introduced during dry-blending of the powder ingredients or during the initial compression or in a subsequent compression step.

### EXAMPLES

The following examples illustrate embodiments of the present invention. Only the Examples falling into the scope of the claims are considered as part of the present invention.

Two samples of field dried Black Mitcham variety peppermint were obtained from Essex Laboratories in Chehalis, Washington USA. The first sample (Control 1) was a coarse cut leaf from the 2015 crop. The second sample (Control 2) was a "teacut" leaf from the 2016 crop. Both samples were subjected to gamma irradiation.

Example 1: (not according to the present invention) the 2015 coarse leaf was exposed to 2.35 to 2.43 kGy in 24 min.

Example 2: (not according to the present invention) the 2015 coarse leaf was exposed to 5.64-5.91 kGy in 59 min.

Example 3: the 2015 coarse leaf was exposed to 10.70-11.53 kGy in 74 min.

Example 4: the 2015 coarse leaf was exposed to 15.24-16.19 kGy in 288 min.

Example 5: (not according to the present invention) the 2016 teacut leaf was exposed to 5.49-5.94 kGy in 56 min.

Example 6: the 2016 teacut leaf was exposed to 15.74-17.28 kGy in 310 min.

The samples were tested for mint oil content and microbial load with the results noted in Table 1.

| Table 1 | | | | | | | |
|---|---|---|---|---|---|---|---|
| Sample | Mint oil % | MOLD (est cfu/g) | YEAST (est cfu/g) | APC (cfu/g) | COLIFORMS (MPN/g) | E COLI (MPN/g) | SALMONELLA |
| Control 1 | 1.60 | 9100 | 7200 | 77000 | 1100 | <3 | neg |
| Control 2 | 1.08 | 8500 | 60000 | 111000 | 1100 | <3 | neg |
| Example 1 | 1.51 | 11000 | <10 | 140000 | 4 | <3 | neg |
| Example 2 | 1.36 | 520 | 130 | 1500 | <3 | <3 | neg |
| Example 3 | 1.49 | <10 | <10 | 50 | <3 | <3 | neg |
| Example 4 | 1.57 | <10 | <10 | <10 | <3 | <3 | neg |
| Example 5 | 1.13 | 100 | 110 | 370 | <3 | <3 | neg |
| Example 6 | 1.21 | <10 | <10 | <10 | <3 | <3 | neg |

The results indicate that Example 1 was not sufficiently irradiated, and that the irradiation of Examples 2 and 5 was marginally sufficient. Samples 3, 4 and 6 were sufficiently irradiated. No level of irradiation affected mint oil content significantly.

Unless otherwise specified, all percentages provided here are percent by weight of the identified product or component.

## Claims

1. A method of preparing a chewing gum or confectionery product comprising pieces of plant material comprising the steps of:
preparing plant material pieces of a desired size, wherein the plant material is a leaf,
irradiating the plant pieces with gamma radiation for a time and intensity sufficient to render it microbiologically stable while substantially preserving the color and flavor of the plant material, wherein the plant material is dried prior to irradiation, wherein the energy absorbed by the dried plant material is at least 10 kGy, and wherein the time of irradiation is at least 40 minutes,
preparing a chewing gum or confectionery product,
incorporating the irradiated plant material into the mass, or onto the surface, of the chewing gum or confectionery product.

2. The method of claim 1 wherein the energy absorbed by the dried plant material is at least 12 kGy.

3. The method of claim 2 wherein the energy absorbed by the dried plant material is at least 15 kGy.

4. The method of any of claims 1 to 3 wherein the energy absorbed by the dried plant material is less than 20 kGy.

5. The method of any of claims 1 to 3 wherein the energy absorbed by the dried plant material is less than 30 kGy.

6. The method of any of claims 1 to 3 wherein the energy absorbed by the dried plant material is less than 50 kGy.

7. The method of claims 1 to 6 wherein the time of irradiation is at least 50 minutes.

8. The method of claim 7 wherein the time of irradiation is at least 60 minutes, at least 100 minutes, or at least 200 minutes.

## Patentansprüche

1. Verfahren zum Zubereiten eines Kaugummis oder Konfektprodukts, umfassend Stücke von Pflanzenmaterial, umfassend die Schritte:
Zubereiten von Pflanzenmaterialstücken einer gewünschten Größe, wobei das Pflanzenmaterial ein Blatt ist,
Bestrahlen der Pflanzenstücke mit Gammastrahlung für eine Zeit und mit einer Intensität, die ausreicht, um sie mikrobiologisch stabil zu machen, während die Farbe und der Geschmack des Pflanzenmaterials im Wesentlichen bewahrt bleiben, wobei das Pflanzenmaterial vor der Bestrahlung getrocknet wird, wobei die durch das getrocknete Pflanzenmaterial absorbierte Energie mindestens 10 kGy beträgt und wobei die Bestrahlungszeit mindestens 40 Minuten beträgt,
Zubereiten eines Kaugummis oder Konfektprodukts,
Einarbeiten des bestrahlten Pflanzenmaterials in die Masse oder auf die Oberfläche des Kaugummis oder Konfektprodukts.

2. Verfahren nach Anspruch 1, wobei die durch das getrocknete Pflanzenmaterial absorbierte Energie mindestens 12 kGy beträgt.

3. Verfahren nach Anspruch 2, wobei die durch das getrocknete Pflanzenmaterial absorbierte Energie mindestens 15 kGy beträgt.

4. Verfahren nach einem der Ansprüche 1 bis 3, wobei die durch das getrocknete Pflanzenmaterial absorbierte Energie weniger als 20 kGy beträgt.

5. Verfahren nach einem der Ansprüche 1 bis 3, wobei die durch das getrocknete Pflanzenmaterial absorbierte Energie weniger als 30 kGy beträgt.

6. Verfahren nach einem der Ansprüche 1 bis 3, wobei die durch das getrocknete Pflanzenmaterial absorbierte Energie weniger als 50 kGy beträgt.

7. Verfahren nach den Ansprüchen 1 bis 6, wobei die Bestrahlungszeit mindestens 50 Minuten beträgt.

8. Verfahren nach Anspruch 7, wobei die Bestrahlungszeit mindestens 60 Minuten, mindestens 100 Minuten oder mindestens 200 Minuten beträgt.

## Revendications

1. Procédé de préparation d'un chewing-gum ou d'un produit de confiserie comprenant des morceaux de matière végétale comprenant les étapes consistant à :
préparer des morceaux de matière végétale d'une taille souhaitée, dans lequel la matière végétale est une feuille,
irradier les morceaux végétaux avec des rayons gamma pendant une durée et une intensité suffisantes pour les rendre microbiologiquement stables tout en préservant sensiblement la couleur et l'arôme de la matière végétale, dans lequel la matière végétale est séchée avant l'irradiation, dans lequel l'énergie absorbée par la matière végétale séchée est d'au moins 10 kGy, et dans lequel la durée d'irradiation est d'au moins 40 minutes,
préparer un chewing-gum ou un produit de confiserie,
incorporer la matière végétale irradiée dans la masse, ou sur la surface, du chewing-gum ou du produit de confiserie.

2. Procédé selon la revendication 1, dans lequel l'énergie absorbée par la matière végétale séchée est d'au moins 12 kGy.

3. Procédé selon la revendication 2, dans lequel l'énergie absorbée par la matière végétale séchée est d'au moins 15 kGy.

4. Procédé selon l'une quelconque des revendications 1 à 3, dans lequel l'énergie absorbée par la matière végétale séchée est inférieure à 20 kGy.

5. Procédé selon l'une quelconque des revendications 1 à 3, dans lequel l'énergie absorbée par la matière végétale séchée est inférieure à 30 kGy.

6. Procédé selon l'une quelconque des revendications 1 à 3, dans lequel l'énergie absorbée par la matière végétale séchée est inférieure à 50 kGy.

7. Procédé selon les revendications 1 à 6, dans lequel la durée d'irradiation est d'au moins 50 minutes.

8. Procédé selon la revendication 7, dans lequel la durée d'irradiation est d'au moins 60 minutes, d'au moins 100 minutes ou d'au moins 200 minutes.
